# EUROPÄISCHE PATENTSCHRIFT

(11) **EP 1 741 330 B1**
(45) Veröffentlichungstag und Bekanntmachung des Hinweises auf die Patenterteilung: **10.09.2008**
(21) Anmeldenummer: 06012715.6
(22) Anmeldetag: 21.06.2006
(51) Int. Cl.: A01D 89/00

(54) **Aufsammelvorrichtung zum Aufnehmen von am Boden liegenden Erntegut**
Pick-up for collecting agricultural produce on the ground
Dispositif de ramassage pour ramasser des produits agricoles sur le sol

(30) Priorität: 04.07.2005 DE 102005031489
(43) Veröffentlichungstag der Anmeldung: 10.01.2007
(73) Patentinhaber: CLAAS Saulgau GmbH, 88348 Bad Saulgau (DE)
(72) Erfinder: Boll, Ulrich, 88348 Bad Saulgau (DE); Gernert, Siegfried, 88339 Bad Walsdee-Mittelurbach (DE)

(56) Entgegenhaltungen:
- EP-A- 0 119 658
- DE-A1- 3 634 577
- US-A- 4 030 274
- US-A- 4 043 099

## Beschreibung

Die Erfindung betrifft eine Aufsammeleinrichtung (Pick up) zum Aufnehmen von am Boden liegenden Erntegut gemäß dem Oberbegriff des unabhängigen Anspruchs 1.

### Stand der Technik

Aufnahmevorrichtungen dieser Art sind auch bekannt unter dem Namen Pick up. Sie werden verwand um beispielsweise geschwadetes Erntegut, wie Grünfutter, Heu oder Stroh, vom Boden aufzunehmen, und um dieses beispielsweise einem Feldhäcksler, einer Ballenpresse oder einem Ladewagen zu zuführen.

Aus der US-A-4043099 ist eine Vorrichtung als Pick up bekannt, bei der der vertikale Abstand zwischen dem Aufsammelrotor und der Querförderschecke mittels eines Hydraulikzylinders im laufenden Aufsammelbetrieb fernbedienbar vom Fahrersitz aus veränderbar ist. Aus der EP-A-119685 ist ein gezogener Feldhäcksler mit einer Erntematerial-Aufnahmevorrichtung bekannt, bei der die Querförderschnecke an Schwingen befestigt und gelagert ist, wobei die Schwingen an Zugfedern abgehängt sind und die Querförderschnecke somit überwiegend vertikale Bewegungen relativ zur Erntematerial-Aufnahmevorrichtung ausführen kann, wodurch sich der Abstand zwischen Aufnahmevorrichtung und der Querförderschecke verändern kann.

Aus der DE 36 34 577 ist eine Aufnahmevorrichtung (Pick up) bekannt, die es sich zur Aufgabe gestellt hat, die Übergabe des Erntegutes von den Zinkenspitzen der Aufnahmetrommel und der Querförderschnecke zu verbessern, in dem der Abstand der Zinkenspitzen in der Betriebsstellung im oberen Bereich der Aufnahmetrommel und dem Umkreis der Förderschnecke in der gleichen Größenordnung wie der Abstand zwischen Förderboden und Förderschnecke, maximal jedoch 40 mm ist.

Die Anforderungen an derartige Aufsammeleinrichtungen sind jedoch hinsichtlich der Durchsatzleistungen zwischenzeitlich erheblich gestiegen, da die Arbeitsbreiten der Aufnahmevorrichtungen ebenfalls erheblich zugenommen haben. Bei größerem Emtegutdurchsatz kann es dabei zu Problemsituationen derart kommen, dass die Förderschnecke durch die Querförderung des Erntegutes Querkräfte auf die Federzinken der Aufnahmetrommel ausübt, welche diese plastisch verformen können, welches dann zu vorzeitigem Verschleiß und notwendigem Austausch derselben führen würde.

### Aufgabenstellung

Hier setzt die Aufgabe der Erfindung an, um die vorgenannten Probleme abzustellen oder zumindest erheblich zu mindern, indem eine Aufnahmevorrichtung vorgeschlagen wird, die in der Lage ist, bei extrem unterschiedlichen Erntegutdurchsätzen hinsichtlich der aufzunehmenden Futtermassen verbesserte Übergabebedingungen von der Aufsammelvorrichtung auf die Querfördereinrichtung zu schaffen.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Die Erfindung sieht dabei vor, den Abstand der Rotationsachsen von Aufsammelrotor und Querförderschnecke ausgebildet als Querfördereinrichtung variabelzu gestalten, wobei dieser Abstand auch im laufenden Aufsammelbetrieb fernbedienbar vom Fahrersitz des Trägerfahrzeugs oder eines Zugfahrzeugs aus veränderbar sein soll.

Erfindungsgemäß geschieht dieses dadurch, dass Aufsammelrotor und Querförderschnecke als Querfördereinrichtung, durch einen Stellantrieb betätigt, ihren Abstand zueinander verändern können, ohne dabei gleichzeitig und notwendigerweise ihren Abstand gegenüber dem Förderboden zu verändern. In besonders vorteilhafter Weise kann dieser Stellantrieb als Hydraulikzylinder ausgebildet sein, der in der Lage ist, die Lagerpunkte der Aufsammeltrommel relativ zu den Lagerpunkten der Förderschnecke, etwa längs der Ebene des Fördertisches, zu verschieben. Dadurch bleibt der Abstand des Fördertisches gegenüber der Förderschnecke etwa unverändert, wohingegen der Abstand zwischen den Rotationsachsen von Förderschnecke und Aufnahmetrommel sich verändert.

### Ausführungsbeispiel

Es zeigen:

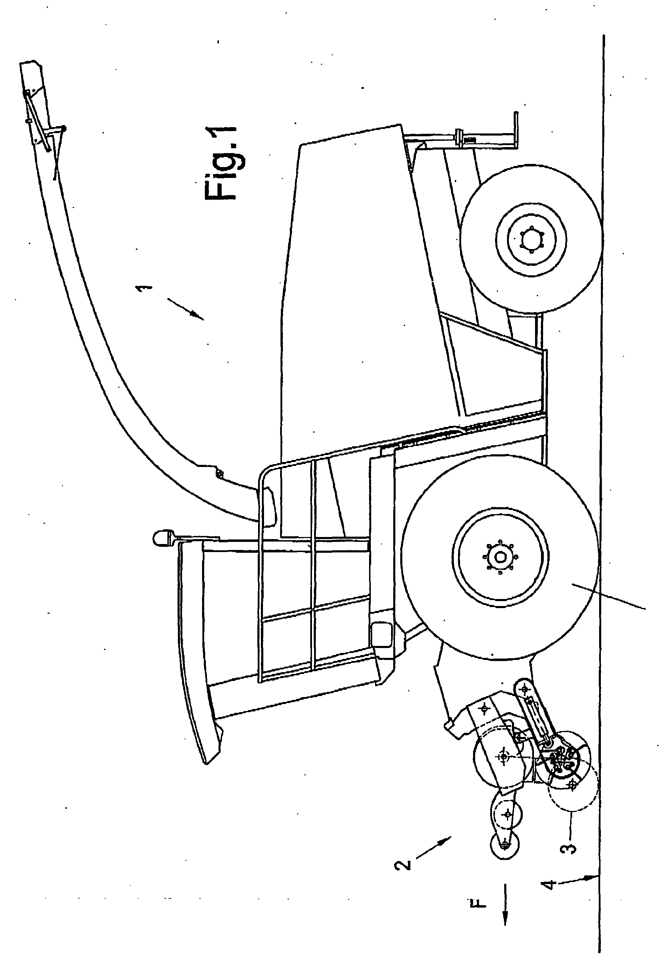

- Fig. 1: eine Aufsammeleinrichtung (Pick up) in Arbeitsstellung angebaut an einem Feldhäcksler als Trägerfahrzeug

Fig. 1 zeigt als exemplarisches Beispiel der Erfindung eine Aufsammeleinrichtung (Pick up) 2, angebaut vor den Vorderrädern 5 an einem Feldhäcksler als Trägerfahrzeug 1 in Arbeitsstellung. In der Arbeitsstellung stützen die Tast- und Stützräder 3 die Aufsammeleinrichtung 2 am Boden 3 ab. Die Fahrtrichtung F wird durch den Fahrtrichtungspfeil angezeigt.

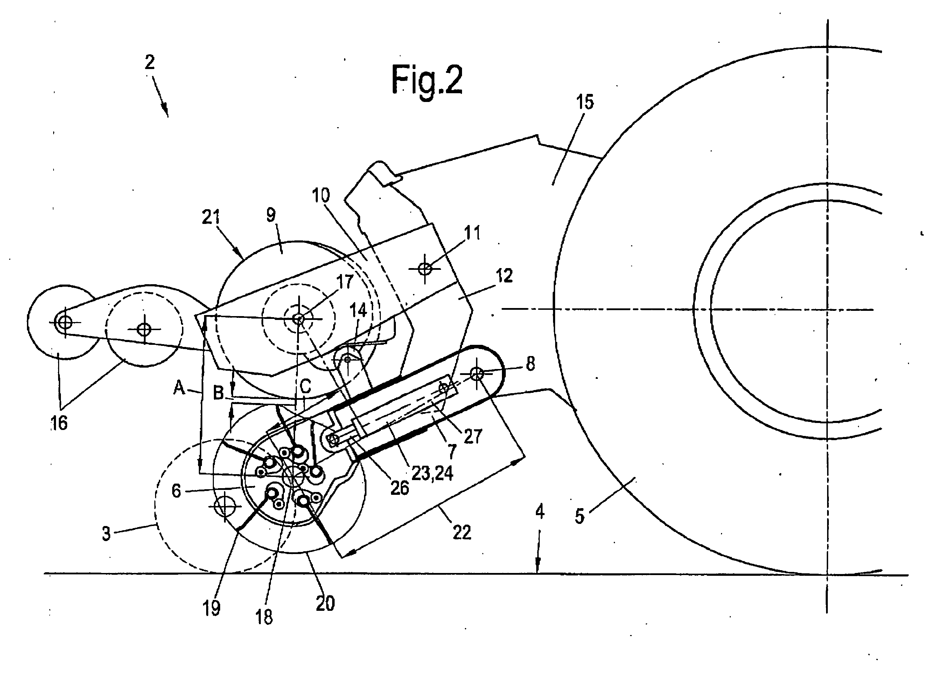

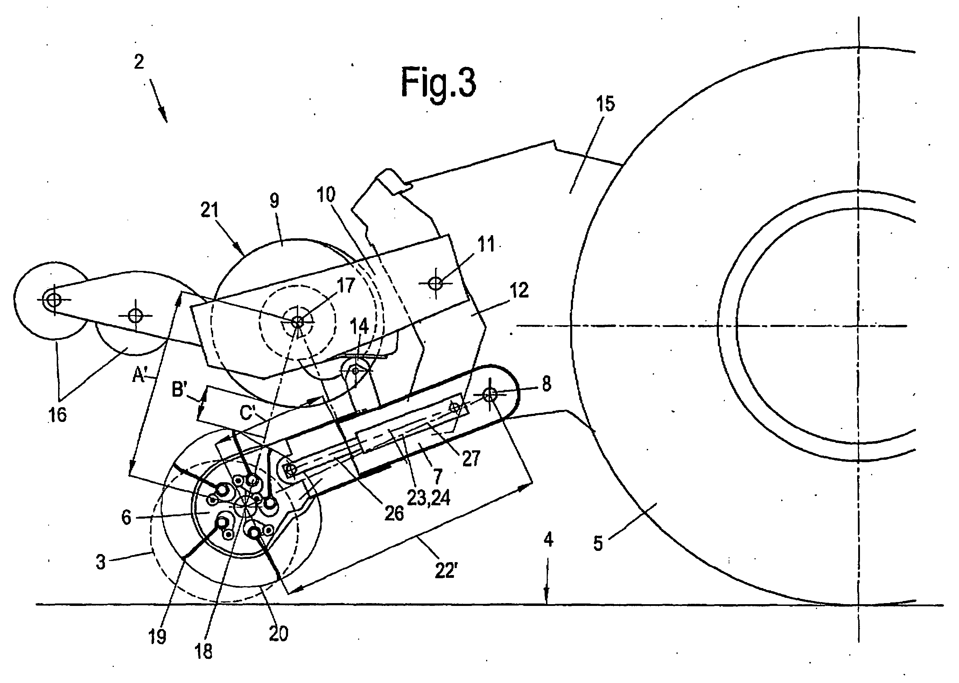

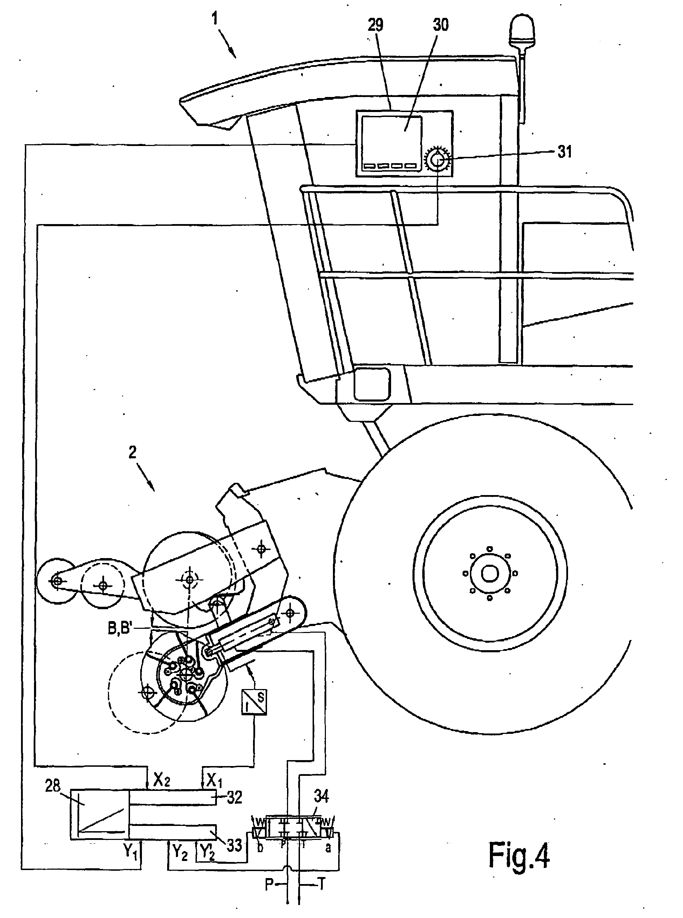

Fig.2 und Fig.3 zeigen einen vergrößerten Ausschnitt aus Fig.1 in vereinfachter Darstellung, welche das Wesentliche der Erfindung zum Ausdruck bringt. Die Aufsammeleinrichtung 2 besteht im Wesentlichen aus den funktionalen Elementen Aufsammelrotor mit Federzinken 19, der Querförderschnecke 9, dem Maschinengestell 12 und dem Rollenniederhalter 16. In dem dargestellten Ausführungsbeispiel handelt es sich um eine Aufsammeleinrichtung 2 mit einem Aufsammelrotor 6 mit einer dem Fachmann bekannten Kurvenbahn und gesteuerten Federzinken 19, so dass die Federzinken 19 in bekannter Weise während der umlaufenden Rotation um die Rotationsachse 18 unterhalb der Förderschnecke abtauchen können. Gleichermaßen kann der Aufsammelrotor 6 auch ungesteuerte Federzinken 19 aufweisen.

Der Aufsammelrotor 6 ist beidseitig quer zur Fahrtrichtung F an den freien Enden der Schwingen 7 umlaufend angetrieben gelagert, wobei sich die gebundenen Enden der Schwingen 7 in Schwenklagern 8 an dem Maschinengestell 12 abstützen. Die Querförderschnecke 9 ist beidseitig quer zur Fahrtrichtung F an den freien Enden der Schwingen 10 umlaufend angetrieben gelagert, wobei sich die gebundenen Enden der Schwingen 10 in Schwenklagern 11 an dem Maschinengestell 12 abstützen. Dem Maschinengestell 12 schließt sich der Einzugsschacht des Trägerfahrzeugs 1 an, durch den hindurch das aufgenommene Erntegut in dem Ausführungsbeispiel der Häckseltrommel des Feldhäckslers zugeführt wird. Die Schwinge 7 mit dem Aufsammelrotor 6 stützt sich zudem mittels der beidseitig des Aufsammelrotors 6 befindlichen Tast- und Stützräder 3 am Boden 4 ab, so dass der Abstand der Zinkenspitzen der Federzinken 19 etwa konstant bleibt. Die Schwinge 10 der Querförderschnecke 9 stützt sich auf den Auflagerrollen 14, die in ihren Rollenlagern abgestützt sich wiederum an den Schwingen 7 abstützen. Bewegt sich der Aufsammelrotor 6 dem Bodenrelief folgend auf- oder abwärts, so folgt auch die Querförderschnecke 9, abgestützt auf den Auflagerrollen den Auf- und Abwärtsbewegungen des Aufsammelrotors 6, so dass der momentan eingestellte Achsabstand A,A' zwischen der Konturbahn der Federzinken 19 und dem Konturkreis 21 der Querförderschnecke 9 bzw. die Abstände B,B' und C,C' etwa konstant bleiben.

Das am Boden liegende Erntegut wird von den Federzinken 19 des umlaufenden Aufsammelrotors 6 aufgenommen und oberhalb von diesem an die Querförderschnecke 9 übergeben und von dieser in bekannter Weise zur Mitte der Aufsammeleinrichtung 2 hin gefördert und von dort an den Einzugschacht 15 übergeben.

Die Erfindung sieht nun vor, dass der Achsabstand 22,22' von dem Schwenklager 8 der Schwinge 7 variabel so veränderbar ist, dass der Aufsammelrotor 6 in der horizontalen Ebene gegenüber der Querförderschnecke 9 verrückbar ist, so dass der Abstand B,B' zwischen Konturbahn 20 und Konturkreis 21 einstellbar veränderbar ist. In dessen Folge verändern sich ebenfalls auch die Abstände A,A' bzw. C,C'. Dieses dient erfindungsgemäß dazu, dass diese Abstände auf unterschiedliche Massenströme des Erntguts anpassbar bzw. einstellbar sind, so dass die Federzinken je nach Anforderung näher oder weiter von der Querförderschnecke entfernt sind.

In dem dargestellten Ausführungsbeispiel sind die Schwingen 7 teleskopierbar so ausgebildet, dass sich der Achsabstand 22,22' durch einen Stellantrieb verändern lässt. In besonders vorteilhafter Weise kann der Stellantrieb 23 als Hydraulikzylinder 24 ausgebildet sein, da die Hydrostatik an Bord aller Trägerfahrzeuge 1 oder Zugfahrzeuge wie Traktoren als Standard gilt, so dass die Stellantriebe 23 ohne besonderen Aufwand in derartige hydrostatische Systeme integrierbar sind. Dabei kann die Kolbenstange 27 des Hydraulikzylinders 24 in ihrer Lage nach der Verstellung des Achsabstandes 22,22' in ebenfalls besonders einfacher Art, beispielsweise durch eine entsperrbares Zwillingsrückschlagventil oder durch ein Sitzventil in dem Zylindergehäuse 26 des Hydraulikzylinders 24, eingespannt und unverrückbar festgelegt werden. Alternativ sind jedoch andere Stellantriebe, beispielsweise elektrisch angetriebene Spindelverstellungen oder pneumatisch angetriebene Stellantriebe 23 möglich. Der Verstellvorgang kann beispielsweise vom Fahrersitz des Traktors mittels eines handbetätigbaren hydraulischen Wegeventils erfolgen.

In einer weiteren Ausgestaltung der Erfindung kann der Stellantrieb 23 auch mit einem Wegaufnehmer oder Wegmesssystem ausgestattet sein, welches dem Fahrer anzeigt, in welcher Stellung sich Aufsammelrotor 6 und Querförderschnecke 9 zueinander befinden, so dass er dieses ohne seinen Fahrerstand verlassen zu müssen, jederzeit ablesen kann. Dabei ist es ebenfalls eine erfinderische Ausgestaltung der Erfindung, dass der Fahrer während des laufenden Betriebs auch ohne anzuhalten während der Fahrt, den Abstand B.B' und damit den Abstand der Konturbahn 20 der Federzinkenspitzen zum Konturkreis 21 der Förderschecke verändern kann.

Beispielswiese kann der Hydraulikzylinder 24 ein integriertes Wegmesssystem 27 aufweisen, dessen Ausgangssignal als erstes Eingangssignal X1 am Eingang 32 eines Mikroprozessors 28 an Bord des Trägerfahrzeugs 1 anliegt. Am Ausgang 33 des Mikroprozessors 28 liegt gleichzeitig ein erstes Ausgangssignal Y1 an, welches beispielsweise gleichzeitig am Terminal 29 in unmittelbarer Umgebung des Fahrersitzes des Trägerfahrzeugs 1 mit einer Anzeigeeinheit 30 anliegt, und dessen Pegel den Istzustand des Wegmesssystems 27 und damit den Istzustand des Abstands B,B' anzeigt. Gleichzeitig kann das Terminal 29 ein Stellglied 31, beispielsweise in Form eines Drehpotentiometers aufweisen, welches eine stufenlose Veränderung des Sollwertes für den Abstand B,B' ermöglicht, wobei dieser Sollwert ein zweites Eingangssignal X2 für den Eingang 32 des Mikroprozessor 28 darstellt. Somit kann der Mikroprozessor 28 durch einen kontinuierlichen Soll-/Istvergleich von Eingangssignal X1 und Eingangssignal X2 steuerungstechnisch auf den Abstand B,B' einwirken, indem ein zweites Ausgangssignal Y₂ oder Y'₂ einen Aktor 34 betätigt, z.B. durch ein Wegeventil, welches mit der Pumpenleitung P und der Tankrücklaufleitung T des hydrostatischen Systems des Trägerfahrzeugs 1 verbunden ist, und der den Stellantrieb 23 in die gewünschte Richtung zur Vergrößerung oder Verkleinerung des Abstand B,B' betätigt. Prinzipiell ist es auch möglich, die gleichen erfinderischen Effekte zu erzielen, wenn statt der Schwinge 7 des Aufsammelrotors 6 die Schwinge 10 der Querförderschnecke 9 längenveränderbar ausgestaltet ist.

Das dargelegte Ausführungsbeispiel ist exemplarisch zu verstehen und es schließt alle anderen Ausführungsbeispiele, die in Ihrer Wirkung die erfinderische Lösung nachbilden, mit ein.

### Bezugszeichenliste

- 1: Trägerfahrzeug
- 2: Aufsammeleinrichtung (Pick up)
- 3: Tast- und Stützrad
- 4: Boden
- 5: Vorderrad vom Trägerfahrzeug
- 6: Aufsammelrotor
- 7: Schwinge
- 8: Schwenklager
- 9: Querfördereinrichtung (Querförderschnecke)
- 10: Schwinge
- 11: Schwenklager
- 12: Maschinengestell
- 13: Förderboden
- 14: Auflagerrolle
- 15: Einzugsschacht
- 16: Rollenniederhalter
- 17: Rotationsachse
- 18: Rotationsachse
- 19: Federzinken
- 20: Konturbahn
- 21: Konturkreis
- 22,22': Achsabstand
- 23: Stellantrieb
- 24: Hydraulikzylinder

## Patentansprüche

1. Aufsammeleinrichtung (2) zum Aufnehmen von am Boden liegendem Erntegut und zum Anbau an ein Trägerfahrzeug (1), beispielsweise Feldhäcksler, Ladewagen oder Ballenpresse, mit wenigstens einem Aufsammelrotor (6) und einer oberhalb des Aufsammelrotors (6) angeordneten Querfördereinrichtung (9), **dadurch gekennzeichnet, dass** der Aufsammelrotor (6) beidseitig und quer zur Fahrtrichtung an den freien Enden von telekopierbaren Schwingen (7) umlaufend angetrieben gelagert ist und sich die gebundenen Enden der Schwingen (7) in Schwenklagern (8) an dem Maschinegestell abstützen, wobei der Aufsammelrotor (6) durch den Stellantrieb (23) gegenüber der Querförderschnecke (9) ausgebildet als Querfördereinrichtung in der horizontalen Ebene verrückt werden kann.

2. Vorrichtung nach Anspruch 1, **dadurch gekennzeichnet, dass** sich die in Schwingen (10) gelagerte Querförderschnecke (9) auf Auflagerrollen (14), welche an den Schwingen (7) gelagert sind, abstützt.

3. Vorrichtung nach Anspruch 1 und 2, **dadurch gekennzeichnet, dass** der Abstand (B,B') zwischen der Kurvenbahn (20) der Federzinkenspitzen und dem Konturenkreis (21) der Querförderschnecke einstellbar veränderbar ist.

4. Vorrichtung nach Anspruch 1, **dadurch gekennzeichnet, dass** der Stellantrieb (23) hydraulische, pneumatische oder elektrische betätigt werden kann.

5. Vorrichtung nach Anspruch 1 bis 4, **dadurch gekennzeichnet, dass** der Stellantrieb (23) mittels eines Stellglieds (31) vom Fahrersitz aus fern betätigbar ist.

6. Vorrichtung nach Anspruch 1 bis 5, **dadurch gekennzeichnet, dass** der Stellantrieb (23) in Wirkverbindung mit wenigstens einem Wegmesssystem (27) steht.

7. Vorrichtung nach Anspruch 6, **dadurch gekennzeichnet, dass** der Stellantrieb (23) wenigstens einen Hydraulikzylinder (24) mit einem integrierten Wegmesssystem (27) umfasst.

8. Vorrichtung nach Anspruch 1 in Verbindung mit einem oder mehreren der vorhergehenden Ansprüche, **dadurch gekennzeichnet, dass** der Stellantrieb (23) mit einem Mikroprozessor (28) in Wirkverbindung steht.

9. Vorrichtung nach Anspruch 1 in Verbindung mit einem oder mehreren der vorhergehenden Ansprüche, **dadurch gekennzeichnet, dass** das Wegmesssystems (27) ein erstes Eingangssignal (X₁₎ und ein Stellglied (31) ein zweites Ausgangssignal (X₂₎ generiert die am Eingang (32) eines Mikroprozessor (28) anliegen

10. Vorrichtung nach Anspruch 1 in Verbindung mit einem oder mehreren der vorhergehenden Ansprüche, **dadurch gekennzeichnet, dass** am Ausgang (33) des Mikroprozessors (28) eine Ausgangssignal ansteht, welches genutzt werden kann zur Darstellung wenigstens einer der Abstände (A,A';B,B',C,C') auf einer Anzeigeeinheit (30) in der Umgebung des Fahrerplatzes.

11. Vorrichtung nach Anspruch 1 in Verbindung mit einem oder mehreren der vorhergehenden Ansprüche, **dadurch gekennzeichnet, dass** der Mikroprozessor (28) aus einem Soll/lstvergleich der Eingangssignale (X₁,X₂) ein aktorisches Ausgangssignal Y₂ gerieren kann, welches zur Ansteuerung eines Aktors (34) zur Betätigung des Stellgliedes (31) genutzt werden kann.

## Claims

1. A pickup device (2) for picking up crop material lying on the ground and for mounting to a carrier vehicle (1), for example a forage harvester, a loading truck or a bale press, comprising at least one pickup rotor (6) and a transverse conveyor device (9) arranged above the pickup rotor (6), **characterised in that** the pickup rotor (6) is mounted driven in rotation at both sides and transversely with respect to the direction of travel at the free ends of telescopic swing arms (7) and the connected ends of the swing arms (7) are supported in pivot bearings (8) on the machine frame, wherein the pickup rotor (6) can be displaced by the setting drive (23) with respect to the transverse conveyor screw (9) in the form of a transverse conveyor device in the horizontal plane.

2. Apparatus according to claim 1 **characterised in that** the transverse conveyor screw (9) which is mounted in swing arms (10) is supported on support rollers (14) which are mounted to the swing arms (7).

3. Apparatus according to claim 1 and claim 2 **characterised in that t**he spacing (B, B') between the curved path (20) of the spring tine tips and the contour circle (21) of the transverse conveyor screw is adjustably variable.

4. Apparatus according to claim 1 **characterised in that** the setting drive (23) can be actuated hydraulically, pneumatically or electrically.

5. Apparatus according to claims 1 to 4 **characterised in that** the setting drive (23) is remotely actuable from the driving seat by means of a setting member (31).

6. Apparatus according to claims 1 to 5 **characterised in that** the setting drive (23) is operatively connected to at least one travel measuring system (27).

7. Apparatus according to claim 6 **characterised in that** the setting drive (23) includes at least one hydraulic cylinder (24) with an integrated travel measuring system (27).

8. Apparatus according to claim 1 in conjunction with one or more of the preceding claims **characterised in that** the setting drive (23) is operatively connected to a microprocessor (28).

9. Apparatus according to claim 1 in conjunction with one or more of the preceding claims **characterised in that** the travel measuring system (27) generates a first input signal (X₁) and a setting member (31) generates a second output signal (X₂), which are applied at the input (32) of a microprocessor (28).

10. Apparatus according to claim 1 in conjunction with one or more of the preceding claims **characterised in that** at the output (33) of the microprocessor (28) is an output signal which can be used to represent at least one of the spacings (A, A'; B, B', C, C') on a display unit (30) in the area surrounding the driving position.

11. Apparatus according to claim 1 in conjunction with one or more of the preceding claims **characterised in that** from a reference/actual comparison of the input signals (X₁, X₂) the microprocessor (28) can generate an actuator output signal Y₂ which can be used for operating an actuator (33) for actuation of the setting member (31).

## Revendications

1. Dispositif de ramassage pour ramasser des produits agricoles sur le sol, qui est prévu pour être monté sur un véhicule porteur (1) tel que par exemple une ramasseuse-chargeuse, une chargeuse ou une presse à balles et qui comporte au moins un rotor de ramassage (6) avec, au-dessus de celui-ci, un dispositif de transport transversal (9) **caractérisé en ce que** le rotor de ramassage (6) est monté avec entraînement en rotation, de part et d'autre et transversalement à la direction de déplacement de la machine, sur les deux extrémités libres de bras oscillants télescopiques (7) dont les autres extrémités s'appuient par des paliers d'oscillation (8) sur le châssis de la machine, et il est possible pour ce rotor, par un entraînement de positionnement (23), d'être déplacé dans le plan horizontal par rapport au transporteur à vis (9) constituant le dispositif de transport transversal.

2. Dispositif selon la revendication 1, **caractérisé en ce que** le transporteur à vis (9) est en appui sur les bras oscillants (7) par l'intermédiaire de galets d'appui (14) montés sur ces bras (7).

3. Dispositif selon la revendication 1 ou 2, **caractérisé en ce que** la distance (B, B') entre le chemin incurvé (20) des extrémités des pointes élastiques et le contour circulaire (21) du transporteur à vis peut varier de manière réglable.

4. Dispositif selon la revendication 1, **caractérisé en ce que** l'entraînement de positionnement (23) peut être actionné hydrauliquement, pneumatiquement ou électriquement.

5. Dispositif selon une des revendications 1 à 4, **caractérisé en ce que** l'entraînement de positionnement (23) peut être actionné à distance, depuis le siège du conducteur, par un organe de positionnement (31).

6. Dispositif selon une des revendications 1 à 5, **caractérisé en ce que** l'entraînement de positionnement (23) est en interaction avec au moins un système de mesure de distance (27).

7. Dispositif selon la revendication 6, **caractérisé en ce que** l'entraînement de positionnement (23) comprend au moins un vérin hydraulique (24) dans lequel est intégré un système de mesure de distance (27).

8. Dispositif selon la revendications 1, en liaison avec une ou plusieurs des revendications précédentes, **caractérisé en ce que** l'organe de positionnement (23) est en interaction avec un microprocesseur (28).

9. Dispositif selon la revendication 1, en liaison avec une ou plusieurs des revendications précédentes, **caractérisé en ce que** le système de mesure de distance (27) génère un premier signal d'entrée (X₁) et un organe de réglage (31) génère un second signal d'entrée (X₂), avec envoi des deux signaux à l'entrée (32) d'un microprocesseur (28).

10. Dispositif selon la revendication 1, en liaison avec une ou plusieurs des revendications précédentes, **caractérisé en ce qu'**à la sortie (33) du microprocesseur (28) est produit un signal de sortie qui peut être utilisé pour faire apparaître au moins une des distances (A, A' ; B, B' ; C, C') dans une unité indicatrice (30) qui est située à proximité de la place du conducteur.

11. Dispositif selon la revendication 1, en liaison avec une ou plusieurs des revendications précédentes, **caractérisé en ce que** le microprocesseur (28) peut, en comparant les valeurs de consigne et réelles des signaux d'entrée (X₁, X₂) générer un signal de sortie (Y₂) à effet d'actionnement, qui peut être utilisé pour commander un actionneur (34) de l'organe de positionnement (31).
